# EUROPEAN PATENT SPECIFICATION

(11) **EP 0 502 834 B1**
(45) Date of publication and mention of the grant of the patent: **28.08.1996**
(21) Application number: 92850043.8
(22) Date of filing: 03.03.1992
(51) Int. Cl.: B23B 5/12, B23B 27/16

(54) **Cutting tool for a peeling operation**
Schneidwerkzeug für einer Schäloperation
Outil de coupe pour une opération de décolletage

(30) Priority: 04.03.1991 DE 9100621 U
(43) Date of publication of application: 09.09.1992
(73) Proprietor: SANDVIK AKTIEBOLAG, 811 81 Sandviken (SE)
(72) Inventor: Hansson, Sölve, S-811 60 Sandviken (SE); Dahllöf, Yngve, S-811 30 Sandviken (SE)
(74) Representative: Taquist, Lennart

(56) References cited:
- DE-A- 3 540 665
- FR-A- 2 359 667
- FR-A- 2 483 819

## Description

The present invention relates to a cutting tool for a bar peeling operation according to the precharacterizing part of claim 1. Such a tool is known from FR-A-2483819.

Bar peeling as a metalworking operation means that a non-rotatable bar is axially displaced through a central hole of a rotary cutter head. The cutter head is provided with several tools which remove from the bar a thin layer of millscale, surface cracks, etc., that results from the hot rolling of such bars or tubes. In order to achieve the best results regarding tolerances and surface finish, two different types of inserts, i.e., roughing and finishing inserts, are usually combined in the same holder. One of the most commonly used inserts for bar peeling is a so-called trigonal insert as shown and described in U.S. Patent 4,035,888. That insert is in the form of a regular polygonal body the corners of which are configured symmetrically about a corner bisector. Such inserts, however, have somewhat limited utility because they do not enable desired results to be achieved when large feeds are involved.

The DE-A-3540665 shows a cutting tool for bar peeling comprising a cutter head equipped with a holder carrying a round roughing insert and a multicornered finishing insert, each said insert including top and bottom surfaces and a peripheral edge surface extending therebetween. The roughing insert has a central tap around which a number of convexly shaped segments are arranged whilst being brazed to each other. These brazed interfaces will be susceptible to breakage under the impact of heavy cutting forces and heavy vibrations acting thereupon.

The FR-A-2483819 shows a cutting tool for bar peeling comprising a cutter head equipped with a multicornered polygonal roughing insert confined by a plurality of convexly curved cutting edges and a multicornered finishing insert. The roughing insert and the finishing insert each is provided with three convexly curved cutting edges. However, the finishing insert of such tool does not comprise a straight cutting edge that extends parallel with the central axis of the workpiece with which the tool is engaged. Also, there is no indication about providing said inserts such that the roughing insert is inclined in a forward direction that is perpendicular from the radial direction of inclination of the same insert. Such inserts will therefor not achieve desired results in bar peeling when large feeds are involved.

In view thereof, it is a purpose of this invention to provide a new type of cutting tool for bar peeling with a roughing insert having continuously convexly curved cutting edge portions, to be used together with subsequent wiper inserts at large cutting depths.

It is another purpose of the invention to provide an insert with an extended lifetime.

It is yet another purpose of the invention to provide an insert which allows favorable chipbreakers thereon to be used for both large and small cutting depths at large feeds. It is yet another purpose of the invention to provide an insert having a short contact surface towards the workpiece which can reduce the tendency for vibrations to occur during a cutting operation.

### Summary of the invention

These and other objects of the invention are achieved by such a known tool, characterized by the features defined in claim 1.

The roughing insert is formed in such manner that the convexly curved cutting edges are tangentially oriented in relation to an imaginary circle inscribed in said insert.

The finishing insert is preferably of triangular form and tangentially oriented in relation to an imaginary circle inscribed in said finishing insert.

Preferably, the curved edges on the roughing insert intersect at corners at an obtuse angle that amounts to 120-140°.

The roughing insert and the finishing insert are suitably arranged in such a manner that the roughing insert is engageable with a workpiece at a cutting depth that is several times larger than the cutting depth at which the finishing insert is engageable with same workpiece.

The bisector of the radially innermost corner of the roughing insert preferably forms an acute angle of 5-25°, preferably 10-25° with a normal that passes through said corner whilst simultaneously extending at right angle from a cutting edge on the finishing insert, said last cutting edge being arranged parallel with the central axis of the workpiece with which said insert is brought into cutting engagement.
Fig 1 is a perspective view of a conventional cutting tool for bar peeling,
Fig 2 is a perspective view of a toolholder for bar peeling provided with inserts embodying the invention,
Fig 3 is an enlarged plan view of the toolholder in Fig 2 equipped with inserts embodying the invention,
Fig 4 is a plan view of a toolholder with inserts of this invention in engagement with a workpiece, and
Fig 5 is a side view of a toolholder as shown in Fig 2.

### Detailed Description of a Preferred Embodiment of the Invention

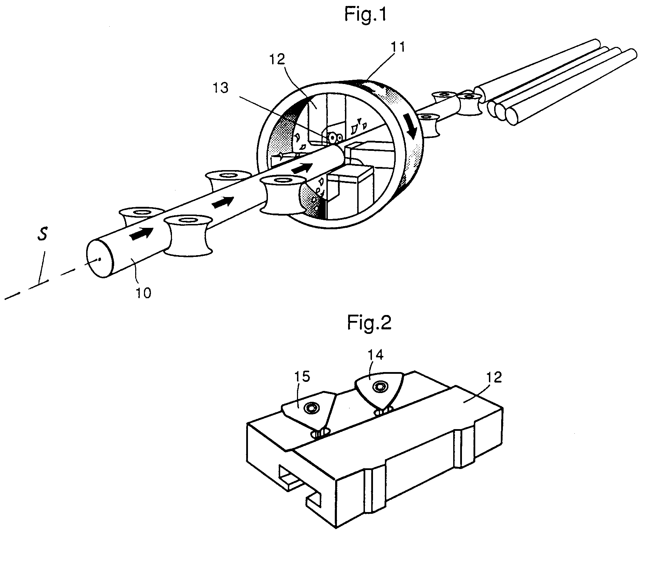

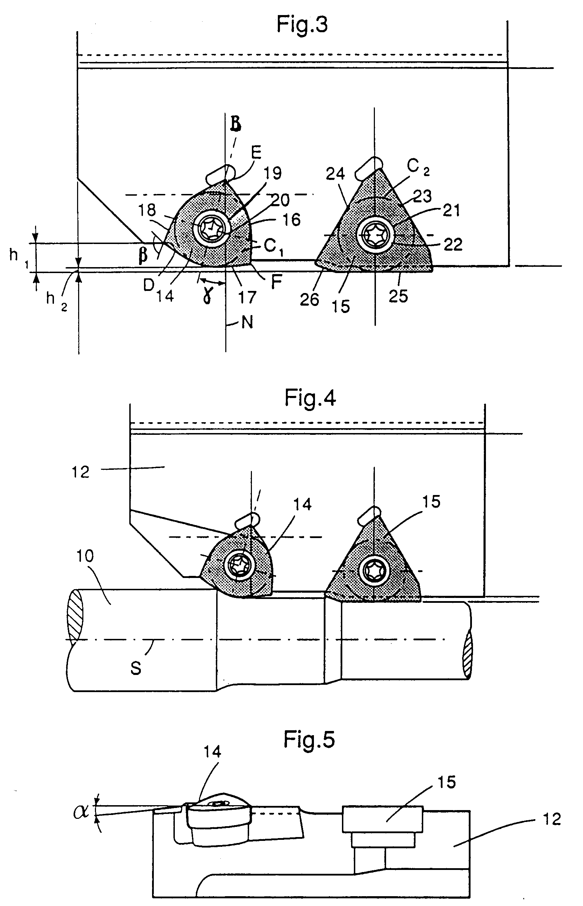

In Fig 1 there is a cylindrical bar 10 which is intended to be subject of a bar peeling operation by a rotary cutting head 11 equipped with a plurality of radially extending toolholders 12, each of which is carrying two inserts 13 of cemented carbide or similar hard and wear resistant material. The head 11 rotates about an axis s, which coincides with the axis of the workpiece. As appears, from Figs 2-4 the cutting tool of this invention includes a toolholder 12 that is provided with a roughing insert 14 intended for roughing operations to cutting depth h₁ and a finishing or wiper insert 15 provided at a certain distance from said roughing insert 14 whilst intended to provide the finished surface at cutting depth h₂. The cutting depth h₁ is several times larger than the cutting depth h₂. Further, as appears from Fig 5 the roughing insert 14 is inclined in relation to the horisontal plane of the tool holder 12 at an angle α i.e. its front side (left in Fig 5) is lower than its rear side (right in Fig 5). This angle α usually amounts to 2-4°, and at the same time said roughing insert is tilted forwardly at the same angle α, i.e. it is inclined in a direction that is perpendicular from said first tilting direction.

The roughing insert is provided with three distinct, convexly curved cutting edges 16, 17, 18. In this case the insert 14 has a central aperture 19 for the receipt of a central locking screw 20 or a lever. In the alternative the insert could be compact and secured by means of a clamp acting towards its top surface.

It is characteristic that the roughing insert 14 has negative basic shape, i.e. its top and bottom surfaces are oriented perpendicularly in relation to the edge surfaces located between said top and bottom surfaces. The curvature of the convexly curved cutting edges 16, 17, 18 is such that these edges are tangentially provided in relation to an inscribed imaginary circle C₁. The two edges 17 and 18 intersect at a corner D at an angle 120-140° whereby said corner area is smoothly rounded at a certain radius and the cutting edges 18 and 16 intersect in same manner at a corner E and edges and cutting edges 16 and 17 are similarly intersecting at the same angle β in a corner F. It is also characteristic that the bisector B in the radially innermost corner E is forming an acute angle γ with a normal N which extends through said corner E whilst at the same time forming a right angle with the central line S of symmetry of the workpiece which in this case is a cylindrical bar 10 with which the insert 14 engages. The size of this angle should be 5-25°, preferably 10-25°. The finishing insert 15, located at some distance from the roughing insert 14, is triangularly formed, and is in similarity with said roughing insert provided with a central aperture 21 for the receipt of a correspondingly dimensioned centre screw 22. An imaginary circle C₂ of same diameter as circle C₁ is tangentially provided in regard of the three straight cutting edges 23, 24, 25.

It is characteristic that each corner of this insert is provided with a secondary cutting edge where the main edge engaging the workpiece in Fig 3 is designated 26 and the adjacent secondary cutting edge is deisgnated 25. The main cutting edge 26 is inclined at an angle of 10-20° in relation to the direction of the secondary cutting edge 25. The finishing insert 15 is arranged such that its secondary edge 25 is tangential in regard of the inscribed circle C₂ and such that its top face lies in a plane identical with or plane parallel with the top surface at the holder 12 whereas said roughing insert 14 is inclined in the manner related above.

It is to be understood that the finishing insert 15 could have other form than triangular. The insert 15 could for instance have a so-called trigonal form, i.e. an insert with angularly broken edges such as shown in US Patent 4,035,888. The important aspect when selecting the form of the finishing insert is that is must appear with a linearly shaped secondary cutting edge.

As a general rule for the dimensioning of the roughing insert 14, it has been found suitable to provide the curved edges of said insert 14 with such radius that substantially corresponds with the diameter of the circle C₁ inscribed in said insert.

It has been discovered that a bar peeling tool equipped with toolholders with one or more such inserts 14 as related above enables a favorable reduction or even elimination of the difficulties initially referred to as inherent with prior art tools. By providing such a roughing insert 14 with larger abutment surface against its seating in the toolholder, and by achieving a more stable abutment, preferably achieved by arranging the centre axis of the clamping screw 20 eccentrically displaced from the centre of the insert hole 19, larger bar peeling depths are achievable as well as increased mechanical strength of the insert. Thanks to the arrangement of a roughing insert 14 having such a large radius for each cutting edge 16, 17, 18 a good surface finish at reduced sensitivity for vibrations is also achieved.

In comparison with an entirely round insert a more fixed clamping is achieved which eliminates the risk for undesired rotation of the insert. Because the setting angle is varying from a certain angle value down to 0° the lifetime can be substantially improved at intermittent machining of a workpiece.

## Claims

1. A cutting tool for bar peeling comprising a rotatable cutter head equipped with a plurality of toolholders (12), each of which is carrying a multicornered polygonal roughing insert (14) of wear resistant material being provided with a plurality of separate and convexly curved cutting edges and a multicornered finishing insert (15), each said insert including top and bottom surfaces and a peripheral edge surface extending therebetween, said edge surfaces intersecting said top and bottom surfaces to form cutting edges, **characterized** in that
a) the roughing insert (14) is a single multicornered polygonal body providing three cutting edges wherein each cutting edge forms two obtuse-angled corners with two others of the cutting edges, said convexly curved cutting edges are tangentially oriented in relation to an imaginary circle inscribed in said polygonal body,
b) the inserts (14, 15) are provided with central apertures extending entirely through said inserts for the receipt of a clamp screw engageable with the hole walls of said central apertures, and
c) the roughing insert (14) is inclined in relation to the horisontal plane of the toolholder (12) at an acute angle (α) of 2-4° such that a portion of said roughing insert disposed farthest from said finishing insert is spaced below said plane, and that said roughing insert is tilted at same acute angle in a direction that is perpendicular from said first tilting direction.

2. Cutting tool as defined in claim 1,
**characterized** in that the edges of the finishing insert (15) are tangentially provided in relation to a circle (C₂) inscribed in said insert.

3. Cutting tool as defined in claim 1,
**characterized** in that the curved edges (16, 17, 18) on the roughing insert (14) intersect in corners at an obtuse angle (β) that is 120-140°.

4. Cutting tool as defined in any of the claims 1-3,
**characterized** in that the roughing insert (14) and the finishing insert (15) are so arranged in the toolholder (12) that the roughing insert (14) is engageable with a workpiece (10) at a cutting depth (h₁) that is several times larger than the cutting depth (h₂) at which the finishing insert (15) is engageable with said workpiece.

5. Cutting tool as defined in claim 1,
**characterized** in that the bisector (β) of the radially innermost corner (E) of the roughing insert (14) forms an acute angle (γ) with a normal (N) passing through said corner (E) whilst extending at right angle from a cutting edge (25) on the finishing insert (15), said cutting edge (25) simultaneously being arranged parallel with the centre axis of the workpiece (10) with which said insert is in cutting engagement.

6. Cutting tool as defined in claim 5,
**characterized** in that the angle (γ) amounts to 5-25°, preferably 10-25°.

7. Cutting tool as defined in any of the claims 1-6,
**characterized** in that the curved edges (16, 17, 18) of the roughing insert (14) is of such radius that substantially corresponds with the diameter of the circle (C₁) inscribed in said insert (14).

8. Cutting tool as defined in any of the claims 1-7,
**characterized** in that the finishing insert (15) has three straight secondary cutting edges (23, 24, 25) which are tangentially provided in regard of an imaginary circle (C₂) having a radius equal to the radius of the imaginary circle (C₁) inscribed in the roughing insert (14).

## Patentansprüche

1. Schneidwerkzeug für Stabschälen mit einem drehbaren Fräserkopf, der mit mehreren Werkzeughaltern (12) ausgestattet ist, von denen jeder einen mehreckigen polygonalen Vorbearbeitungseinsatz (14) aus verschleißbeständigem Material, der mit mehreren getrennten und konvex gekrümmten Schneidkanten versehen ist, und einen mehreckigen Fertigbearbeitungseinsatz (15) trägt, wobei jeder dieser Einsätze eine obere und eine untere Oberfläche und eine sich dazwischen erstreckende Umfangskantenoberfläche einschließt und wobei die Kantenoberflächen die obere und untere Oberfläche unter Bildung von Schneidkanten schneiden, **dadurch gekennzeichnet**, daß
a) der Vorbearbeitungseinsatz (14) ein einzelner mehreckiger polygonaler Körper ist, der drei Schneidkanten liefert, wobei jede Schneidkante zwei stumpfwinklige Ecken mit zwei anderen der Schneidkanten bildet, und die konvex gekrümmten Schneidkanten in bezug auf einen in den polygonalen Körper einbeschriebenen imaginären Kreis tangential ausgerichtet sind,
b) die Einsätze (14, 15) mit mittigen Öffnungen versehen sind, die sich vollständig durch diese Einsätze zur Aufnahme einer Klammerschraube erstrecken, welche in Anlage an die Öffnungswände der mittigen Öffnungen bringbar ist, und
c) der Vorbearbeitungseinsatz (14) in bezug auf die horizontale Ebene des Werkzeughalters (12) in einem spitzen Winkel (α) von 2 bis 4° derart geneigt ist, daß ein Teil dieses Vorbearbeitungseinsatzes, der am weitesten von dem Fertigbearbeitungseinsatz entfernt angeordnet ist, unter dieser Ebene im Abstand angeordnet ist und daß der Vorbearbeitungseinsatz in dem gleichen spitzen Winkel in einer Richtung geneigt ist, die senkrecht zu der ersten Neigungsrichtung liegt.

2. Schneidwerkzeug nach Anspruch 1, **dadurch gekennzeichnet**, daß die Kanten des Fertigbearbeitungseinsatzes (15) in bezug auf einen in diesem Einsatz einbeschriebenen Kreis (C₂) tangential vorgesehen sind.

3. Schneidwerkzeug nach Anspruch 1, **dadurch gekennzeichnet**, daß sich die gekrümmten Kanten (16, 17, 18) an dem Vorbearbeitungseinsatz (14) in Ecken in einem stumpfen Winkel (β) schneiden, der 120 bis 140° beträgt.

4. Schneidwerkzeug nach einem der Ansprüche 1 bis 3, **dadurch gekennzeichnet**, daß der Vorbearbeitungseinsatz (14) und der Fertigbearbeitungseinsatz (15) in dem Werkzeughalter (12) so angeordnet sind, daß der Vorbearbeitungseinsatz (14) mit einem Werkstück (10) in einer Schneidtiefe (h₁) in Eingriff bringbar ist, die mehrfach größer als die Schneidtiefe (h₂) ist, mit welcher der Fertigbearbeitungseinsatz (15) mit dem Werkstück in Eingriff bringbar ist.

5. Schneidwerkzeug nach Anspruch 1, **dadurch gekennzeichnet**, daß die Winkelhalbierende (β) der radial innersten Ecke (E) des Vorbearbeitungseinsatzes (14) einen spitzen Winkel (γ) mit einer Normalen (N) bildet, die durch diese Ecke (E) geht, während sie sich in einem rechten Winkel zu der Schneidkante (25) an dem Fertigbearbeitungseinsatz (15) erstreckt, wobei diese Schneidkante (25) gleichzeitig parallel zu der Mittelachse des Werkstückes (10) angeordnet ist, mit welchem der Einsatz in Schneideingriff steht.

6. Schneidwerkzeug nach Anspruch 5, **dadurch gekennzeichnet**, daß der Winkel (γ) 5 bis 25°, vorzugsweise 10 bis 25°, beträgt.

7. Schneidwerkzeug nach einem der Ansprüche 1 bis 6, **dadurch gekennzeichnet**, daß die gekrümmten Kanten (16, 17, 18) des Vorbearbeitungseinsatzes (14) solchen Radius haben, daß dieser im wesentlichen dem Durchmesser des in diesem Einsatz (14) einbeschriebenen Kreis (C₁) entspricht.

8. Schneidwerkzeug nach einem der Ansprüche 1 bis 7, **dadurch gekennzeichnet**, daß der Fertigbearbeitungseinsatz (15) drei gerade sekundäre Schneidkanten (23, 24, 25) hat, die tangential in bezug auf einen imaginären Kreis (C₂) vorgesehen sind, der einen Radius gleich dem des in den Vorbearbeitungseinsatz (14) einbeschriebenen imaginären Kreises (C₁) hat.

## Revendications

1. Outil de coupe pour l'écroûtage de barre comprenant une tête de fraise tournante munie d'une pluralité de porte-outils (12), chacun d'entre eux portant un insert de dégrossissage polygonal à coins multiples (14) en un matériau résistant à l'usure qui est muni d'une pluralité de bords coupants incurvés de manière convexe et séparés, et un insert de finition à coins multiples (15), chaque dit insert comportant des surfaces supérieure et inférieure et une surface de bord périphérique s'étendant entre ces dernières, lesdites surfaces de bord croisant lesdites surfaces supérieure et inférieure de manière à former des bords coupants, caractérisé en ce que
a) l'insert de dégrossissage (14) est un unique corps polygonal à coins multiples procurant trois bords coupants, dans lequel chaque bord coupant forme deux coins à angle obtus avec les deux autres bords coupants, lesdits bords coupants incurvés de manière convexe sont orientés tangentiellement à un cercle imaginaire inscrit dans ledit corps polygonal,
b) les inserts (14, 15) comportent des ouvertures centrales s'étendant entièrement à travers lesdits inserts pour recevoir une vis de serrage pouvant être engagée avec les parois de trou desdites ouvertures centrales, et
c) l'insert de dégrossissage (14) est incliné par rapport au plan horizontal du porte-outil (12) sous un angle aigu (α) de 2-4° de telle façon qu'une partie dudit insert de dégrossissage disposé le plus loin dudit insert de finition est espacée dudit plan, et en ce que ledit insert de dégrossissage est incliné sous un même angle aigu dans une direction perpendiculaire à ladite première direction d'inclinaison.

2. Outil de coupe selon la revendication 1, caractérisé en ce que les bords de l'insert de finition (15) sont tangentiels à un cercle (C₂) inscrit dans ledit insert.

3. Outil de coupe selon la revendication 1, caractérisé en ce que les bords incurvés (16, 17, 18) de l'insert de dégrossissage (14) se croisent sous un angle obtus (β) qui est de 120-140°.

4. Outil de coupe selon l'une quelconque des revendications 1 à 3, caractérisé en ce que l'insert de dégrossissage (14) et l'insert de finition (15) sont disposés dans le porte-outil (12) de telle façon que l'insert de dégrossissage (14) peut être engagé avec une pièce à usiner (10) à une profondeur de coupe (h₁) qui est de plusieurs fois supérieure à la profondeur de coupe (h₂) à laquelle l'insert de finition (15) peut être engagé avec ladite pièce à usiner.

5. Outil de coupe selon la revendication 1, caractérisé en ce que la bissectrice (β) du coin le plus radialement intérieur (E) de l'insert de dégrossissage (14) forme un angle aigu (γ) avec une normale (N) passant par ledit coin (E) tout en s'étendant en faisant un angle droit par rapport à un bord coupant (25) sur l'insert de finition (15), ledit bord coupant (25) étant simultanément disposé parallèlement à l'axe central de la pièce à usiner (10) avec laquelle ledit insert est en engagement de coupe.

6. Outil de coupe selon la revendication 5, caractérisé en ce que l'angle (γ) est de 5-25°, préférablement de 10-25°.

7. Outil de coupe selon l'une quelconque des revendications 1 à 6, caractérisé en ce que les bords incurvés (16, 17, 18) de l'insert de dégrossissage (14) ont un rayon tel qu'il correspond sensiblement au diamètre du cercle (C₁) inscrit dans ledit insert (14).

8. Outil de coupe selon l'une quelconque des revendications 1 à 7, caractérisé en ce que l'insert de finition (15) possède trois bords coupants auxilaires droits (23, 24, 25) qui sont placés tangentiellement à un cercle imaginaire (C₂) ayant un rayon égal au rayon du cercle imaginaire (C₁) inscrit dans l'insert de dégrossissage (14).
